# EUROPÄISCHE PATENTANMELDUNG

(11) **EP 3 285 436 A1**
(43) Veröffentlichungstag der Anmeldung: **21.02.2018**
(21) Anmeldenummer: 16184513.6
(22) Anmeldetag: 17.08.2016
(51) Int. Cl.: H04L 12/40

(54) **NETZWERK FÜR EINEN FAHRZEUGVERBUND UND VERFAHREN ZUM HERSTELLEN EINES NETZWERKS FÜR EINEN FAHRZEUGVERBUND**

(71) Anmelder: Selectron Systems AG, 3250 Lyss (CH)
(72) Erfinder: RADJENOVIC, Tomislav, 3054 Schüpfen (CH)
(74) Vertreter: Prüfer & Partner mbB Patentanwälte · Rechtsanwälte

(57) **Zusammenfassung**

Ein Netzwerk für einen Fahrzeugverbund (10) mit mehreren miteinander gekuppelten, insbesondere spurgebundenen Fahrzeugeinheiten (12) weist ein fahrzeugverbundweites Netzwerk (14), das sich über mehrere der mehreren Fahrzeugeinheiten (12) hinweg erstreckt, und mehrere fahrzeugweite Netzwerke (16), die sich jeweils innerhalb einer der mehreren Fahrzeugeinheiten (12) erstrecken und mit dem fahrzeugverbundweiten Netzwerk (14) über Netzkoppler (18) verbunden sind, auf. Dabei ist das fahrzeugverbundweite Netzwerk (14) aus mehreren Netzwerkabschnitten gebildet, die jeweils in einer der mehreren Fahrzeugeinheiten (12) vorgesehen sind und miteinander gekoppelt sind. Außerdem weist das fahrzeugverbundweite Netzwerk (14) in jeder der mehreren Fahrzeugeinheiten (12) wenigstens eine mit dem jeweiligen Netzwerkabschnitt verbundene Kommunikationseinrichtung (22) auf, die zusammen mit der Kommunikationseinrichtung (22) einer benachbarten der mehreren miteinander gekuppelten Fahrzeugeinheiten (12) eine drahtlose Kommunikationsverbindung (24) bildet.

## Beschreibung

Die Erfindung betrifft ein Netzwerk für einen Fahrzeugverbund mit mehreren miteinander gekuppelten Fahrzeugeinheiten, insbesondere mehreren spurgebundenen Fahrzeugeinheiten, sowie ein Verfahren zum Herstellen eines solchen Netzwerks.

Netzwerke von spurgebundenen Fahrzeugverbünden mit mehreren miteinander gekuppelten Fahrzeugeinheiten ("Consists") weisen in der Regel ein fahrzeugverbundweites Netzwerk (Zugbus, "Train Backbone"), das sich über die mehreren Fahrzeugeinheiten hinweg erstreckt, und mehrere fahrzeugweite Netzwerke (Fahrzeugbus, "Consist Networks"), die sich jeweils innerhalb einer der mehreren Fahrzeugeinheiten erstrecken und mit dem fahrzeugverbundweiten Netzwerk über Netzkoppler (Zugbuskoppler) verbunden sind, auf. Die verschiedenen fahrzeugweiten Netzwerke können nur über das fahrzeugverbundweite Netzwerk miteinander kommunizieren. Spurgebundene Fahrzeugverbünde (z.B. Züge), die aus mehreren Fahrzeugeinheiten bestehen, werden für den täglichen Betrieb immer wieder neu gekoppelt und getauft. Dabei verändern sich die Topologie des fahrzeugverbundweiten Netzwerks und die Netzwerktopologie. Das fahrzeugverbundweite Netzwerk kann deshalb auch als dynamisches Netzwerk bezeichnet werden, während die fahrzeugweiten Netzwerke statische, vorkonfigurierte Netzwerke bilden.

Bei einer Kupplung von zwei oder mehr Fahrzeugeinheiten zu einem Fahrzeugverbund werden neben der mechanischen Kupplung in der Regel auch eine Kupplung von Druckluftleitungen für Bremssysteme und eine Kupplung von Stromversorgungsleitungen vorgenommen. Darüber hinaus müssen auch die Netzwerkabschnitte des fahrzeugverbundweiten Netzwerks der einzelnen Fahrzeugeinheiten miteinander gekoppelt werden, bevor das Datenkommunikationssystem für den gesamten Fahrzeugverbund zum Beispiel im Rahmen einer sogenannten Zugtaufe initialisiert werden kann. Bei herkömmlichen Netzwerken müssen hierzu entsprechende Kabel miteinander verbunden werden.

Es ist die Aufgabe der vorliegenden Erfindung, ein verbessertes Netzwerk für einen Fahrzeugverbund bereitzustellen, bei dem eine Kopplung der Netzwerkabschnitte des fahrzeugverbundweiten Netzwerks auf einfache Weise durchgeführt werden kann.

Diese Aufgabe wird gelöst durch die Lehre der unabhängigen Ansprüche. Besonders vorteilhafte Ausgestaltungen der Erfindungen sind in den jeweiligen Unteransprüchen angegeben.

Das erfindungsgemäße Netzwerk für einen Fahrzeugverbund mit mehreren miteinander gekuppelten Fahrzeugeinheiten weist ein fahrzeugverbundweites Netzwerk, das sich über mehrere der mehreren Fahrzeugeinheiten hinweg erstreckt, und mehrere fahrzeugweite Netzwerke, die sich jeweils innerhalb einer der mehreren Fahrzeugeinheiten erstrecken und mit dem fahrzeugverbundweiten Netzwerk über Netzkoppler verbunden sind, auf, wobei das fahrzeugverbundweite Netzwerk aus mehreren Netzwerkabschnitten gebildet ist, die jeweils in einer der mehreren Fahrzeugeinheiten vorgesehen sind und miteinander gekoppelt sind. Gemäß der Erfindung ist vorgesehen, dass das fahrzeugverbundweite Netzwerk in jeder der mehreren Fahrzeugeinheiten wenigstens eine mit dem jeweiligen Netzwerkabschnitt verbundene Kommunikationseinrichtung aufweist, die zusammen mit der Kommunikationseinrichtung einer benachbarten der mehreren miteinander gekuppelten Fahrzeugeinheiten eine drahtlose Kommunikationsverbindung bildet.

Mit Hilfe der drahtlosen (Daten-)Kommunikationsverbindung zwischen den Kommunikationseinrichtungen von zwei benachbarten gekuppelten Fahrzeugeinheiten kann die Kopplung der Netzwerkabschnitte des fahrzeugverbundweiten Netzwerks auf einfache Weise drahtlos und automatisch erfolgen. Dabei erfolgt diese Kopplung vorteilhafterweise paarweise und eindeutig und damit sehr zuverlässig. Durch die Verwendung einer drahtlosen Kommunikationsverbindung kann ein mehr oder weniger aufwändiger mechanischer Kupplungsvorgang entfallen. Die Kopplung der Netzwerkabschnitte kann vor, nach oder während der Kupplung der Fahrzeugeinheiten erfolgen.

Bei den spurgebundenen Fahrzeugeinheiten ("Consists") handelt es sich vorzugsweise um Schienenfahrzeuge. Eine Fahrzeugeinheit bezeichnet in diesem Zusammenhang ein einzelnes Fahrzeug oder eine Gruppe von Fahrzeugen, die während des normalen Betriebs nicht getrennt werden. Dabei kann es sich sowohl um motorisierte Schienenfahrzeuge wie zum Beispiel Lokomotiven, Triebfahrzeuge, etc. als auch um unmotorisierte Schienenfahrzeuge wie zum Beispiel Waggons handeln. Ein Fahrzeugverbund besteht aus mehreren, d.h. zwei oder mehr solcher Fahrzeugeinheiten, die miteinander gekuppelt sind.

Jede Fahrzeugeinheit weist wenigstens ein fahrzeugweites Netzwerk (Fahrzeugbus, "Consist Network") auf, an welches ein oder mehrere Endgeräte angeschlossen sein können. Bei den Endgeräten handelt es sich zum Beispiel um Antriebssteuerungssysteme, Bremssteuersysteme, Klimasteuersysteme und dergleichen. Die verschiedenen Steuersysteme können an ein gemeinsames fahrzeugweites Netzwerk angeschlossen sein oder jeweils ein eigenes fahrzeugweites Netzwerk aufweisen. Die fahrzeugweiten Netzwerke sind über Netzkoppler (Zugbuskoppler, Gateways, "Train Backbone Nodes") mit dem fahrzeugverbundweiten Netzwerk (Zugbus, "Train Backbone") bzw. seinen Netzwerkabschnitten verbunden und können nur über das fahrzeugverbundweite Netzwerk miteinander kommunizieren. Den Endgeräten aller fahrzeugweiten Netzwerke werden in dem fahrzeugverbundweiten Netzwerk nach dem Kopplungsvorgang der Netzwerkabschnitte zum Beispiel im Rahmen einer sogenannten Zugtaufe eindeutige Netzwerkadressen zugeordnet. Das fahrzeugverbundweite Netzwerk bildet vorzugsweise ein geschlossenes Netz. Zur Erhöhung der Redundanz kann das fahrzeugverbundweite Netzwerk zum Beispiel auch zwei Zugbussysteme aufweisen.

Sowohl das fahrzeugverbundweite Netzwerk als auch die fahrzeugweiten Netzwerke können bevorzugt als leitungsgebundene Bussysteme (z.B. Wire Train Bus WTB, CAN-Powerline, Multifunction Vehicle Bus MVB, CAN) oder als drahtlose Bussysteme (z.B. Ethernet) aufgebaut sein. Besondere Vorteile zeigt die Erfindung in Kombination mit einem leitungsgebundenen fahrzeugverbundweiten Netzwerk.

In einer vorteilhaften Ausgestaltung der Erfindung sind die Kommunikationseinrichtungen jeweils ausgestaltet, um Kopplungssignale in einer vorbestimmten Richtung, in der die Kommunikationseinrichtung einer benachbarten gekuppelten Fahrzeugeinheit zu erwarten ist, auszusenden und/oder zu empfangen. Vorzugsweise weisen die Kommunikationseinrichtungen entsprechende Richtantennen auf, welche die Energie in eine vorbestimmte Richtung bündeln. Durch diese Maßnahme kann gewährleistet werden, dass die Verbindung der Kommunikationseinrichtung des Netzwerkabschnitts in einer Fahrzeugeinheit nur mit der Kommunikationseinrichtung des Netzwerkabschnitts in der benachbarten gekuppelten bzw. zu kuppelnden Fahrzeugeinheit des Fahrzeugverbundes möglich ist. Eine unerwünschte bzw. unbeabsichtigte Kopplung mit anderen Geräten in der Nähe der Kommunikationseinrichtung (z.B. mit einer anderen Kommunikationseinrichtung eines Fahrzeugverbundes auf einem Nachbargleis) kann so vermieden werden.

In einer vorteilhaften Ausgestaltung der Erfindung sind die Kommunikationseinrichtungen jeweils ausgestaltet, um Kopplungssignale nur über eine begrenzte Reichweite auszusenden und/oder zu empfangen. Hierzu können die Sendeleistung und/oder die Empfangsempfindlichkeit der Kommunikationseinrichtungen entsprechend eingestellt werden. Auch durch diese Maßnahme kann gewährleistet werden, dass die Verbindung der Kommunikationseinrichtung des Netzwerkabschnitts in einer Fahrzeugeinheit nur mit der Kommunikationseinrichtung des Netzwerkabschnitts in der benachbarten gekuppelten bzw. zu kuppelnden Fahrzeugeinheit des Fahrzeugverbundes möglich ist. Eine unerwünschte bzw. unbeabsichtigte Kopplung mit anderen Geräten (z.B. mit einer anderen Kommunikationseinrichtung in einer weiter entfernten Fahrzeugeinheit des Fahrzeugverbundes) kann so vermieden werden. Die begrenzte Reichweite beträgt vorzugsweise etwa 10 m, etwa 5 m oder weniger, und sie beträgt vorzugsweise wenigstens etwa 20 cm, etwa 50 cm oder mehr.

In einer weiteren vorteilhaften Ausgestaltung der Erfindung sind die Kommunikationseinrichtungen jeweils so ausgestaltet, dass sie wahlweise als Master oder Slave fungieren können. So können eine größere Variabilität in der Topologie und der Funktionalität des Netzwerks erzielt werden und eine zuverlässige Kopplung der Netzwerkabschnitte des fahrzeugverbundweiten Netzwerks erreicht werden.

In einer weiteren vorteilhaften Ausgestaltung der Erfindung ist den miteinander gekoppelten Kommunikationseinrichtungen benachbarter gekuppelter bzw. zu kuppelnder Fahrzeugeinheiten eine gemeinsame Netzwerkidentifizierung zugeordnet. Durch eine gemeinsame, vorzugsweise einzigartige Netzwerkidentifizierung wird eine sichere Kennung der paarweisen Netzwerkkopplung erzielt. Die gemeinsame Netzwerkidentifizierung kann vorzugsweise aus den Gerätekennungen der beiden beteiligten Kommunikationseinrichtungen gebildet werden.

In einer weiteren vorteilhaften Ausgestaltung der Erfindung weisen die Kommunikationseinrichtungen jeweils eine Sicherung gegen unbefugten Zugriff von außerhalb des Netzwerks auf. Diese Sicherung kann zum Beispiel durch eine Firewall oder dergleichen implementiert sein. Durch eine solche Sicherung kann das geschlossene Netzwerk des Fahrzeugverbundes auch den drahtlosen Kopplungsschnittstellen gegen unbefugten Zugriff von außen geschützt werden.

Vorzugsweise ist die drahtlose Kommunikationsverbindung zwischen den Kommunikationseinrichtungen benachbarter gekuppelter Fahrzeugeinheiten eine Funkverbindung. Die Funkverbindung verwendet zum Beispiel WLAN, Wi-Fi, Bluetooth oder dergleichen.

In dem erfindungsgemäßen Verfahren zum Herstellen eines Netzwerks für einen Fahrzeugverbund aus mehreren miteinander gekuppelten Fahrzeugeinheiten, wobei in jeder der mehreren Fahrzeugeinheiten ein Netzwerkabschnitt eines fahrzeugverbundweiten Netzwerks und ein fahrzeugweites Netzwerk, das mit dem Netzwerkabschnitt des fahrzeugverbundweiten Netzwerks verbunden ist, vorgesehen sind, werden die Netzwerkabschnitte des fahrzeugverbundweiten Netzwerks von benachbarten der miteinander zu kuppelnden Fahrzeugeinheiten paarweise drahtlos miteinander gekoppelt.

Durch die paarweise und drahtlose Kopplung der Netzwerkabschnitte des fahrzeugverbundweiten Netzwerks kann diese Kopplung auf einfache Weise automatisch und eindeutig erfolgen. Durch die drahtlose Kopplung kann ein mehr oder weniger aufwändiger mechanischer Kupplungsvorgang entfallen.

Vorzugsweise werden Kopplungssignale zwischen den zu koppelnden Netzwerkabschnitten des fahrzeugverbundweiten Netzwerks gerichtet und/oder nur über eine begrenzte Reichweite ausgetauscht.

In einer vorteilhaften Ausgestaltung der Erfindung werden die zu koppelnden Netzwerkabschnitte des fahrzeugverbundweiten Netzwerks mittels Kommunikationseinrichtungen, die jeweils mit einem der zu koppelnden Netzwerkabschnitte verbunden sind, drahtlos miteinander gekoppelt.

Vorzugsweise fungieren die Kommunikationseinrichtungen der zu koppelnden Netzwerkabschnitte des fahrzeugverbundweiten Netzwerks zu Beginn eines Kopplungsvorgangs beide als Master und fungiert eine der beiden Kommunikationseinrichtungen der zu koppelnden Netzwerkabschnitte des fahrzeugverbundweiten Netzwerks nach dem Kopplungsvorgang als Slave.

Vorzugsweise weisen die Kommunikationseinrichtungen der zu koppelnden Netzwerkabschnitte des fahrzeugverbundweiten Netzwerks jeweils eine Gerätekennung auf und wird den beiden Kommunikationseinrichtungen der zu koppelnden Netzwerkabschnitte des fahrzeugverbundweiten Netzwerks eine gemeinsame Netzwerkidentifizierung zugeordnet.

Vorzugsweise wird im Fall einer Kopplungsunterbrechung zwischen den zuvor gekoppelten Netzwerkabschnitten des fahrzeugverbundweiten Netzwerks automatisch für eine vorbestimmte Zeitdauer versucht, diese Kopplung der Netzwerkabschnitte wiederherzustellen.

Vorzugsweise erfolgt eine Kommunikation zwischen den zu koppelnden bzw. gekoppelten Netzwerkabschnitten des fahrzeugverbundweiten Netzwerks verschlüsselt. Alternativ oder zusätzlich ist die Kommunikation zwischen den zu koppelnden bzw. gekoppelten Netzwerkabschnitten des fahrzeugverbundweiten Netzwerks vorzugsweise gegen unbefugten Zugriff von außerhalb des Netzwerks gesichert.

Bezüglich weiterer Vorteile, Begriffsdefinitionen und vorteilhafter Ausgestaltungen wird ergänzend auf die obigen Ausführungen in Zusammenhang mit dem Netzwerk der Erfindung verwiesen.

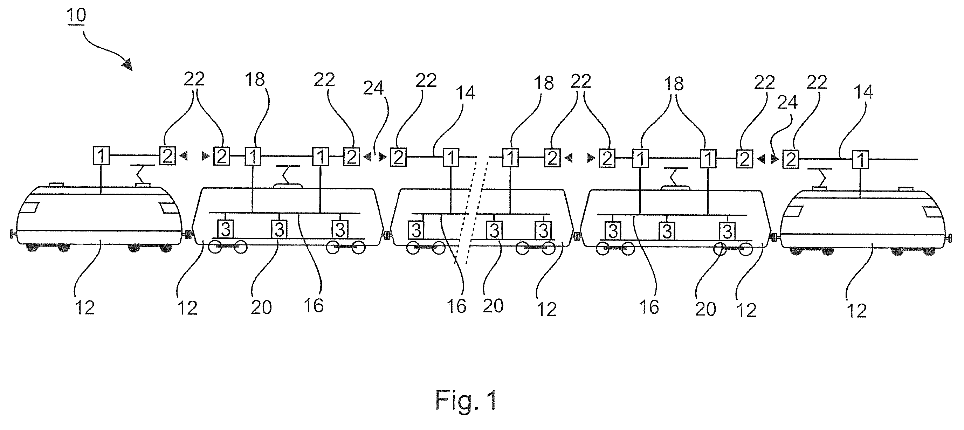

Obige sowie weitere Vorteile, Merkmale und Anwendungsmöglichkeiten der Erfindung werden aus der nachfolgenden Beschreibung eines Ausführungsbeispiels anhand der beiliegenden Zeichnung besser verständlich. Darin zeigt die einzige Figur 1 eine schematische Darstellung eines Fahrzeugverbundes mit einem erfindungsgemäßen Netzwerk.

**Fig. 1** zeigt beispielhaft einen Fahrzeugverbund 10, der aus wenigstens fünf Schienenfahrzeugen als Fahrzeugeinheiten ("Consists") 12 besteht, darunter zwei Triebfahrzeugen und wenigstens drei Waggons.

Das Kommunikations-Netzwerk dieses Fahrzeugverbundes 10 besteht aus einem übergeordneten, fahrzeugverbundweiten Netzwerk (Zugbus, "Train Backbone") 14, das sich über mehrere, bevorzugt über alle Fahrzeugeinheiten 12 erstreckt, und wenigstens einem untergeordneten, fahrzeugweiten Netzwerk (Fahrzeugbus, "Consist Network") 16 in jeder der Fahrzeugeinheiten 12. Die fahrzeugweiten Netzwerke 16 sind über Netzkoppler (Zugbuskoppler, Gateways, "Train Backbone Nodes") 18 mit dem fahrzeugweiten Netzwerk 14 verbunden. An die fahrzeugweiten Netzwerke 16 können jeweils ein oder mehrere Endgeräte 20 wie beispielsweise Antriebssteuerungen, Bremssteuerungen, Klimasteuerungen, etc. angeschlossen werden.

Das fahrzeugverbundweite Netzwerk 14 ist als leitungsgebundenes Netzwerk (z.B. Wire Train Bus WTB, CAN-Powerline) ausgeführt. Die fahrzeugweiten Netzwerke 16 können ebenfalls als leitungsgebundene Netzwerke (z.B. Multifunction Vehicle Bus MVB, CAN) oder drahtlose Netzwerke ausgeführt sein. Vorzugsweise werden für die fahrzeugweiten Netzwerke 16 Ethernet-Netzwerke eingesetzt.

Wie in Fig. 1 dargestellt, weist jede der mehreren Fahrzeugeinheiten 12 einen Netzwerkabschnitt des fahrzeugverbundweiten Netzwerks 14 auf. Diese Netzwerkabschnitte werden mittels Kommunikationseinrichtungen 22 miteinander gekoppelt, wobei zwei Kommunikationseinrichtungen von zwei benachbarten gekuppelten Fahrzeugeinheiten 12 paarweise eine drahtlose Kommunikationsverbindung 24 bilden. Die drahtlose Kommunikationsverbindung 24 ist bevorzugt als Funkverbindung (z.B. WLAN, Wi-Fi, Bluetooth, etc.) ausgestaltet. Die Kommunikationseinrichtungen 22 sind in ihren Fahrzeugeinheiten 12 jeweils physikalisch mit dem Netzwerkabschnitt des fahrzeugverbundweiten Netzwerks 14 verbunden.

Mittels der drahtlosen Kommunikationsverbindungen 24 können die Netzwerkabschnitte des fahrzeugverbundweiten Netzwerks 14 in den einzelnen Fahrzeugeinheiten 12 automatisch miteinander gekoppelt werden, um die anschließende Zugtaufe und den Datentransfer zwischen allen fahrzeugweiten Netzwerken 16 zu ermöglichen. Die eigentliche Zugtaufe wird vorzugsweise weiterhin gemäß der Norm IEC 61375 durchgeführt.

Obwohl hier das physikalische Verbindungskabel des fahrzeugverbundweiten Netzwerks durch eine drahtlose Kommunikationsverbindung 24 ersetzt ist, bildet der gesamte Fahrzeugverbund 10 nach der Zugtaufe ein geschlossenes System. In dem Fahrzeugverbund steht ein durchgehendes Datennetz zur Verfügung, in dem jeder Teilnehmer eine eigene Netzwerkadresse hat und so eindeutig identifizierbar ist.

Der Verbindungsaufbau zwischen den Netzwerkabschnitten des fahrzeugverbundweiten Netzwerks 14 erfolgt paarweise automatisch und ist eindeutig. Dabei ist zu beachten, dass keine ungewollten Verbindungen wie zum Beispiel zu Fahrzeugeinheiten eines anderen Fahrzeugverbundes auf einem Nachbargleis entstehen können. Um solche ungewollten Verbindungen zu verhindern, sind verschiedene Maßnahmen vorgesehen.

Eine dieser Maßnahmen besteht darin, die mit den Netzwerkabschnitten verbundenen Kommunikationseinrichtungen 22 so auszugestalten, dass sie Kopplungssignale - und nach der Kopplung und Zugtaufe auch Datensignale - vornehmlich in einer vorbestimmten Richtung aussenden und empfangen, in der eine Kommunikationseinrichtung 22 der benachbarten zu kuppelnden oder bereits gekuppelten Fahrzeugeinheit 12 zu erwarten ist. Die Kommunikationseinrichtungen 22 können zu diesem Zweck zum Beispiel Richtantennen für Sender und/oder Empfänger aufweisen.

Die Strahlrichtung des Senders der Kommunikationseinrichtung 22 wird räumlich so gewählt, dass die Verbindung nur mit dem gegenüberliegenden Empfänger einer anderen Kommunikationseinrichtung 22 möglich ist. Die vorzugsweise eingesetzten Richtantennen bündeln die HF-Energie in die gewünschte Richtung. Hinter der Antenne (in Gegenrichtung zur Strahlrichtung) sowie zu den Seiten wird immer noch ein Anteil der Energie abgestrahlt, der jedoch zu gering ist, um sich mit falschen Geräten zu koppeln. Ziel ist es, seitlich neben den Fahrzeugeinheiten eine möglichst geringe Feldstärke zu haben, um unerwünschte Verbindungen zum Beispiel mit Kommunikationseinrichtungen von Fahrzeugeinheiten auf einem Nachbargleis zu vermeiden.

Eine weitere Maßnahme besteht in einer geeigneten Einstellung von Sendeleistung und/oder Empfängerempfindlichkeit der Kommunikationseinrichtungen 22. Um nur die gewünschte paarweise Kopplung zwischen den Kommunikationseinrichtungen 22 benachbarter Fahrzeugeinheiten 12 zu erreichen, können die Sendeleistung und/oder die Empfängerempfindlichkeit variiert werden. Hierzu kann beispielsweise RSSI (Received Signal Strength Indication) genutzt werden, ein Indikator für die Empfangsfeldstärke kabelloser Kommunikationsanwendungen. Dieser Indikator wird verwendet, um einen für die Kommunikation brauchbaren Kanal zu finden. Üblicherweise nutzt man eine starke Sendeleistung und einen möglichst empfindlichen Empfänger. Um jedoch das Risiko einer Fehlkopplung mit anderen Geräten zu minimieren, werden die Kommunikationseinrichtungen 22 des erfindungsgemäßen Netzwerks mit einer möglichst eingeschränkten Reichweite ausgestattet. Dies kann dadurch erreicht werden, dass die Sendeleistung und Empfängerempfindlichkeit aufeinander so abgestimmt werden, dass mit Fremdgeräten nicht gekoppelt werden kann. Die Reichweiten der Kommunikationseinrichtungen 22 liegen beispielsweise bei maximal etwa 10 m, bevorzugter bei maximal etwa 5 m.

Die beschriebenen Sicherheitsmechanismen sorgen dafür, dass sich ausschließlich die gewünschten Kommunikationseinrichtungen 22 von zwei benachbarten Fahrzeugeinheiten 12 verbinden können. Vorzugsweise sind weitere Mechanismen vorgesehen, um das Netzwerk des Fahrzeugverbundes 10 gegen Fremdangriffe zu schützen. Hierzu zählen zum Beispiel WPA2-PSK Verschlüsselung, WEP Open System, WEP Shared Key, WPA-PSK, WPA-PSK / WPA2-PSK mixed mode, MAC Filter, Verwendung einzigartiger Netzwerkidentifizierungen (siehe weiter unten), Verbergen und Schützen der Netzwerkidentifizierungen, Firewall, Client Isolation, passwort-geschützter Zugang zum Webinterface, aus/einschaltbares Wireless Radio, ein/ausschaltbarer Bridging Algorithmus, Autorisierung der drahtlosen Kommunikationsverbindung 24 über bestehende physische Leitung, und dergleichen.

Außerdem sind die Kommunikationseinrichtungen 22 des Netzwerks vorzugsweise so ausgestaltet, dass sie bei einem Abbruch der drahtlosen Kommunikationsverbindung 24 für eine vordefinierte Zeitdauer automatisch versuchen, diese Kommunikationsverbindung 24 wiederherzustellen. Wird diese konfigurierbare Zeitdauer überschritten, so wird angenommen, dass die entsprechende Fahrzeugeinheit 12 abgekuppelt worden ist.

Ferner kann eine Ausfallsicherheit des Netzwerks sowohl im Bereich des fahrzeugverbundweiten Netzwerks 14 als auch im Bereich der fahrzeugweiten Netzwerke 16 beispielsweise durch Ringarchitekturen mit Redundanz erhöht werden.

Es soll nun beispielhaft ein automatischer Kopplungsvorgang zwischen zwei Netzwerkabschnitten des fahrzeugverbundweiten Netzwerks 14 mit Hilfe der mit den Netzwerkabschnitten verbundenen Kommunikationseinrichtungen 22 erläutert werden.

Bei dem Algorithmus zur Kopplung zweier Netzwerkabschnitte des fahrzeugverbundweiten Netzwerks 14 handelt es sich bei der drahtlosen Kommunikationsverbindung 24 vorzugsweise um ein Master-Client Prinzip. Zur automatischen Herstellung des teilweise drahtlosen Netzwerks 14 wird bevorzugt ein proprietäres Protokoll verwendet und erfolgt die drahtlose Kommunikationsverbindung 24 bevorzugt verschlüsselt und abgesichert.

Die Master-Client-Verbindung basiert auf dem WDS-Modus. Das Wireless Distribution System (WDS) ist ein Verfahren zur Adressierung von Datenframes in Wireless Local Area Networks (WLAN) nach IEEE 802.11, das anspruchsvolle Topologien ermöglicht. Mittels Service Set Identifiern (SSID) ist ein Gerät innerhalb der Netzwerktopologie eindeutig ansprechbar. Dabei werden alphanumerische Zeichen übertragen. Es können zusätzlich Daten und Informationen wie z.B. Statusinformationen für das Monitoring der Verbindung ausgetauscht werden. Die Geräte nutzen Ihre achtstellige Seriennummer für die eindeutige Identifizierung (SSID).

Zu Beginn sind alle Kommunikationseinrichtungen 22 als Master konfiguriert. Die aktivierten Kommunikationseinrichtungen 22 senden ihre SSID mit der dazugehörenden Seriennummer und suchen nach einem geeigneten Partner mit einer passenden Signalstärke. Dieser Vorgang wird mehrmals wiederholt, um die bestmögliche und stabilste Verbindung sicherzustellen. Nach erfolgreicher Suche bilden die Kommunikationseinrichtungen 22 paarweise ihre SSIDs ab und codieren diese zum Beispiel mittels eines Hash-Algorithmus in eine neue gemeinsame SSID um. So wird eine einzigartige SSID erstellt, die in eindeutiger Weise nur für diese Verbindung zwischen den beiden Kommunikationseinrichtungen 22 gültig ist.

Anschließend wird die Kommunikationseinrichtung 22 mit der höheren Seriennummer zum Master, während die andere Kommunikationseinrichtung 22 zum Client wird. Die neu gebildete, gemeinsame SSID wird verborgen und geschützt.

### BEZUGSZEICHENLISTE

- 10: Fahrzeugverbund
- 12: Fahrzeugeinheiten ("Consists")
- 14: fahrzeugverbundweites Netzwerk ("Train Backbone")
- 16: fahrzeugweite Netzwerke ("Consist Networks")
- 18: Netzkoppler ("Train Backbone Nodes")
- 20: Endgeräte
- 22: Kommunikationseinrichtung
- 24: drahtlose Kommunikationsverbindung

## Patentansprüche

1. Netzwerk für einen Fahrzeugverbund (10) mit mehreren miteinander gekuppelten Fahrzeugeinheiten (12), insbesondere mehreren spurgebundenen Fahrzeugeinheiten, aufweisend
ein fahrzeugverbundweites Netzwerk (14), das sich über mehrere der mehreren Fahrzeugeinheiten (12) hinweg erstreckt; und
mehrere fahrzeugweite Netzwerke (16), die sich jeweils innerhalb einer der mehreren Fahrzeugeinheiten (12) erstrecken und mit dem fahrzeugverbundweiten Netzwerk (14) über Netzkoppler (18) verbunden sind,
wobei das fahrzeugverbundweite Netzwerk (14) aus mehreren Netzwerkabschnitten gebildet ist, die jeweils in einer der mehreren Fahrzeugeinheiten (12) vorgesehen sind und miteinander gekoppelt sind,
**dadurch gekennzeichnet, dass**
das fahrzeugverbundweite Netzwerk (14) in jeder der mehreren Fahrzeugeinheiten (12) wenigstens eine mit dem jeweiligen Netzwerkabschnitt verbundene Kommunikationseinrichtung (22) aufweist, die zusammen mit der Kommunikationseinrichtung (22) einer benachbarten der mehreren miteinander gekuppelten Fahrzeugeinheiten (12) eine drahtlose Kommunikationsverbindung (24) bildet.

2. Netzwerk nach Anspruch 1, bei welchem
die Kommunikationseinrichtungen (22) jeweils ausgestaltet sind, um Kopplungssignale in einer vorbestimmten Richtung, in der die Kommunikationseinrichtung einer benachbarten gekuppelten Fahrzeugeinheit (12) zu erwarten ist, auszusenden und/oder zu empfangen.

3. Netzwerk nach Anspruch 1 oder 2, bei welchem
die Kommunikationseinrichtungen (22) jeweils ausgestaltet sind, um Kopplungssignale über eine begrenzte Reichweite auszusenden und/oder zu empfangen.

4. Netzwerk nach einem der vorhergehenden Ansprüche, bei welchem
die Kommunikationseinrichtungen (22) jeweils ausgestaltet sind, um wahlweise als Master oder Slave zu fungieren.

5. Netzwerk nach einem der vorhergehenden Ansprüche, bei welchem
den miteinander gekoppelten Kommunikationseinrichtungen (22) benachbarter gekuppelter Fahrzeugeinheiten (12) eine gemeinsame Netzwerkidentifizierung zugeordnet ist.

6. Netzwerk nach einem der vorhergehenden Ansprüche, bei welchem
die Kommunikationseinrichtungen (22) jeweils eine Sicherung gegen unbefugten Zugriff von außerhalb des Netzwerks aufweisen.

7. Netzwerk nach einem der vorhergehenden Ansprüche, bei welchem
die drahtlose Kommunikationsverbindung (24) zwischen den Kommunikationseinrichtungen (22) benachbarter gekuppelter Fahrzeugeinheiten (12) eine Funkverbindung ist.

8. Verfahren zum Herstellen eines Netzwerks für einen Fahrzeugverbund (10) aus mehreren miteinander gekuppelten Fahrzeugeinheiten (12), insbesondere mehreren spurgebundenen Fahrzeugeinheiten, wobei in jeder der mehreren Fahrzeugeinheiten (12) ein Netzwerkabschnitt eines fahrzeugverbundweiten Netzwerks (14) und ein fahrzeugweites Netzwerk (16), das mit dem Netzwerkabschnitt des fahrzeugverbundweiten Netzwerks (14) verbunden ist, vorgesehen sind,
**dadurch gekennzeichnet, dass**
die Netzwerkabschnitte des fahrzeugverbundweiten Netzwerks (14) von benachbarten der miteinander zu kuppelnden Fahrzeugeinheiten (12) paarweise drahtlos miteinander gekoppelt werden.

9. Verfahren nach Anspruch 8, bei welchem
Kopplungssignale zwischen den zu koppelnden Netzwerkabschnitten des fahrzeugverbundweiten Netzwerks (14) gerichtet ausgetauscht werden.

10. Verfahren nach Anspruch 8 oder 9, bei welchem
Kopplungssignale zwischen den zu koppelnden Netzwerkabschnitten des fahrzeugverbundweiten Netzwerks (14) über eine begrenzte Reichweite ausgetauscht werden.

11. Verfahren nach einem der Ansprüche 8 bis 10, bei welchem
die zu koppelnden Netzwerkabschnitte des fahrzeugverbundweiten Netzwerks (14) mittels Kommunikationseinrichtungen (22), die jeweils mit einem der zu koppelnden Netzwerkabschnitte verbunden sind, drahtlos miteinander gekoppelt werden.

12. Verfahren nach Anspruch 11, bei welchem
die Kommunikationseinrichtungen (22) der zu koppelnden Netzwerkabschnitte des fahrzeugverbundweiten Netzwerks (14) zu Beginn eines Kopplungsvorgangs beide als Master fungieren, und
eine der beiden Kommunikationseinrichtungen (22) der zu koppelnden Netzwerkabschnitte des fahrzeugverbundweiten Netzwerks (14) nach dem Kopplungsvorgang als Slave fungiert.

13. Verfahren nach Anspruch 11 oder 12, bei welchem
die Kommunikationseinrichtungen (22) der zu koppelnden Netzwerkabschnitte des fahrzeugverbundweiten Netzwerks (14) jeweils eine Gerätekennung aufweisen, und
den beiden Kommunikationseinrichtungen (22) der zu koppelnden Netzwerkabschnitte des fahrzeugverbundweiten Netzwerks (14) eine gemeinsame Netzwerkidentifizierung zugeordnet wird.

14. Verfahren nach einem der Ansprüche 8 bis 13, bei welchem
im Fall einer Kopplungsunterbrechung zwischen den zuvor gekoppelten Netzwerkabschnitten des fahrzeugverbundweiten Netzwerks (14) für eine vorbestimmte Zeitdauer versucht wird, diese Kopplung der Netzwerkabschnitte wiederherzustellen.

15. Verfahren nach einem der Ansprüche 8 bis 14, bei welchem
eine Kommunikation zwischen den zu koppelnden bzw. gekoppelten Netzwerkabschnitten des fahrzeugverbundweiten Netzwerks (14) verschlüsselt erfolgt und/oder gegen unbefugten Zugriff von außerhalb des Netzwerks gesichert ist.
